# FASCICULE DE BREVET EUROPEEN

(11) **EP 1 468 955 B1**
(45) Date de publication et mention de la délivrance du brevet: **07.05.2008**
(21) Numéro de dépôt: 04356030.9
(22) Date de dépôt: 04.03.2004
(51) Int. Cl.: B66C 23/70

(54) **Dispositif d'assemblage démontable des éléments de flèche d'une grue à tour**
Lösbare Verbindungsvorrichtung für Auslegerelemente eines Turmkranes
Dismountable assembly device for jib elements of a tower crane

(30) Priorité: 17.04.2003 FR 0304832
(43) Date de publication de la demande: 20.10.2004
(73) Titulaire: MANITOWOC CRANE GROUP FRANCE, 69130 Ecully (FR)
(72) Inventeur: Lissandre, Michel, 03400 Yzeure (FR)
(74) Mandataire: Bratel, Gérard

(56) Documents cités:
- EP-A- 0 376 417
- DE-A- 4 402 005
- FR-A- 1 467 093
- US-A- 534 507
- US-A- 3 204 514
- US-A- 3 511 388

## Description

La présente invention concerne, de façon générale, le domaine technique des grues à tour. Plus particulièrement, cette invention se rapporte aux flèches à structure en treillis des grues à tour et, encore plus spécifiquement, elle a pour objet un dispositif d'assemblage démontable des éléments de flèche d'une grue à tour. L'invention s'applique, plus spécialement, à l'assemblage des éléments constitutifs d'une flèche de grue ne comportant pas de partie saillante dite tête de mât ou porte-flèche, dépassant au-dessus de la membrure supérieure de la flèche et de la contre-flèche, et associée à des tirants.

D'une façon généralement connue, une flèche de grue à tour, le long de laquelle se déplace habituellement un chariot de flèche, est constituée par une succession d'éléments de flèche, qui sont alignés et assemblés les uns aux autres de manière à constituer une flèche ayant la longueur désirée. Chaque élément de flèche est une structure du genre poutre en treillis, de section triangulaire, rectangulaire ou trapézoïdale, qui comprend des membrures définissant deux à deux des faces planes. Dans chacune de ces faces planes, les deux membrures sont reliées entre elles par des pièces allongées, du genre barres, qui forment ensemble ce que l'on appelle une "triangulation". Ce type de structure est aussi appliqué aux contre-flèches des grues à tour, qui supportent un contrepoids équilibrant la flèche et éventuellement la charge soulevée par la grue.

Dans la mesure où il ne s'agit pas d'une flèche de grue repliable, les éléments constitutifs de la flèche de la grue doivent pouvoir être séparés les uns des autres, pour le transport de la grue, et ces éléments de flèche doivent être assemblés entre eux, sur le lieu d'utilisation de la grue, en vue de reconstituer une flèche de grue utilisable. Les éléments de flèche doivent donc, autant que possible, pouvoir être aisément assemblés les uns aux autres, et aussi être commodément séparables les uns des autres.

De plus, la liaison à réaliser entre de tels éléments de flèche doit être adaptée aux efforts auxquels ces éléments de flèche sont soumis, en particulier lors du travail de la grue. Si l'on considère plus particulièrement les éléments de la partie en "porte-à-faux" de la flèche de la grue, les membrures supérieures de ces éléments sont soumises, en travail ou même au repos, à des efforts de traction, tandis que les membrures inférieures des mêmes éléments de flèche sont sujettes à des efforts de compression.

Le cas de la flèche alignée, et posée au sol sur deux appuis, doit aussi être pris en considération ; il s'agit d'une configuration de montage, dans laquelle les membrures supérieures des éléments de flèche sont soumises à des efforts de compression, alors que les membrures inférieures subissent des efforts de traction.

Le cas de la rupture d'élingue peut encore être pris en considération ; il s'agit d'un cas d'essai correspondant à la rupture des élingues arrimant une charge soulevée, ou à la rupture du câble de levage, provoquant des efforts initialement verticaux qui se répercutent sur les éléments de flèche et sur leurs liaisons. Plus particulièrement, en cas de rupture d'élingue, les membrures supérieures des éléments de flèche sont soumises à des efforts de compression, alors que les membrures inférieures de ces éléments de flèche subissent des efforts de traction.

Il existe déjà divers dispositifs de liaison entre éléments de flèche en treillis, dont la demande de brevet européen EP 0 376 417 A Constitue un exemple particulièrement représentatif. Dans le cas de ce document, les membrures supérieures des éléments de flèche consécutifs, sont assemblées par un système de crochet, avec blocage par une broche à sabot d'appui. Les membrures inférieures des éléments de flèche adjacents sont assemblées de façon classique par des axes de liaison transversaux.

Ce dispositif connu permet un pré-assemblage aisé des membrures supérieures, toutefois avec la nécessité d'un angle de présentation important entre deux éléments consécutifs, comme l'illustre la figure 10 du document précité. Par contre, le dispositif en question n'offre aucun avantage pour l'assemblage des membrures inférieures : pour cette opération, il faut rechercher la coaxialité des trous des membrures inférieures, par engagement en force des axes de liaison (voir la figure 12A).

Au vu de cet état de la technique, la présente invention a pour but de fournir des éléments de flèche d'une grue à tour, en particulier du genre indiqué plus haut, avec un dispositif perfectionné d'assemblage qui facilite l'assemblage au sol des éléments de flèche, pour réduire le temps et l'outillage nécessaires à l'assemblage, tout en supprimant la pénibilité de sa réalisation, la solution proposée permettant aussi un assemblage ou un démontage "en l'air" des éléments de flèche qui soit facile et réalisable en toute sécurité.

A cet effet, l'invention a pour objet des éléments de flèche à structure en treillis d'une grue à tour, ou autre structure en treillis analogue, lesdits éléments comprenant des membrures supérieures et des membrures inférieures, reliées entre elles par des barres de triangulation, éléments pour lesquels au niveau des membrures supérieures il est prévu un assemblage par chape et tenon liés de façon démontable par un axe, avec :
- une chape solidaire d'une extrémité de membrure supérieure d'un élément à assembler, la chape possédant deux branches situées dans des plans verticaux parallèles et percées de trous principaux cylindriques, coaxiaux, de diamètre correspondant au diamètre d'un axe de liaison,
- un tenon solidaire d'une autre extrémité de membrure supérieure d'un élément où assembler, le tenon étant situé dans un plan vertical et étant percé d'un trou oblong,
- l'axe de liaison, apte à être engagé au travers des trous principaux cylindriques de la chape et du trou oblong du tenon, et
- sur la chape et le tenon, des moyens de butée complémentaires, agissant en direction sensiblement verticale et en direction sensiblement horizontale, pour le positionnement relatif de la chape et de la butée lors de l'assemblage,
ces éléments de flèche étant caractérisés en de que les moyens de butée agissant en direction sensiblement horizontale sont constitués, d'une part, par un positionneur rotatif logé dans la chape, et réalisé en forme d'axe traversant deux trous secondaires cylindriques, coaxiaux, ménagés respectivement dans les deux branches de la chape, le positionneur rotatif en forme d'axe étant pourvu d'un méplat et de moyens de manoeuvre et d'immobilisation, qui permettent d'amener et de maintenir le méplat en position verticale, face à l'emplacement de l'axe de liaison, ou en position horizontale, et ces moyens de butée étant constitués, d'autre part, par une face avant plane, sensiblement verticale, du tenon, les éléments de flèche comprenant aussi, au niveau de leurs membrures inférieures :
- deux pions de centrage solidaires d'une extrémité d'un élément à assembler, les axes des pions de centrage étant orientés suivant la direction longitudinale dudit élément,
- deux trous correspondant respectivement aux deux pions de centrage, et formés à une autre extrémité d'un élément à assembler, et
- un ensemble de blocage constitué de deux liaisons espacées l'une de l'autre, avec des moyens de serrage et de blocage, prévues pour réunir les extrémités rapprochées des deux éléments de flèche, au niveau de leurs membrures inférieures.

Dans une forme de réalisation simple, les moyens de butée agissant en direction sensiblement verticale sont constitués par une plaque de butée, réunissant les deux branches de la chape dans leur partie inférieure, et coopérant avec la face inférieure du tenson.

Les moyens de manoeuvre et d'immobilisation du positionneur rotatif comprennent, par exemple, une poignée de commande liée à une extrémité de ce positionneur rotatif; et au moins une goupille d'immobilisation engageable dans un trou diamétral d'une région d'extrémité du positionneur rotatif, ainsi que dans une patte latérale solidaire d'une branche de la chape La ou chaque goupille sert plus particulièrement à l'immobilisation du positionneur rotatif dans sa position angulaire pour laquelle son méplat est en position horizontale. La patte latérale précitée possède avantageusement une échancrure prévue pour coopérer avec la poignée de manoeuvre du positionneur rotatif, en formant une butée d'arrêt de ce positionneur dans sa position angulaire pour laquelle son méplat est en position verticale.

L'axe de liaison, de forme générale cylindrique, engagé au travers de la chape et du tenon, possède à une extrémité une tête élargie, tandis que son autre extrémité comporte un trou diamétral prévu pour recevoir une goupille d'immobilisation, l'axe de liaison ainsi constitué ayant sa tête raccordée, par un court câble de liaison, à la chape ou à un organe retenu sur cette chape. Par exemple, le câble de liaison raccorde la tête de l'axe de liaison au positionneur rotatif, notamment à une goupille de ce positionneur.

Dans une forme de réalisation particulière, chaque pion de centrage comporte, à partir d'une pointe extérieure, successivement : une première partie en forme de tronc de cône, de plus faible diamètre et relativement allongée ; une autre partie en forme de tronc de cône, située dans le prolongement de la précédente, de plus grand diamètre et relativement courte, avec un angle d'ouverture de cône plus grand que celui de la première partie en forme de tronc de cône ; une partie cylindrique de matage, rattachée à la structure de l'élément de flèche, au niveau des membrures inférieures. En particulier, les pions de centrage sont montés sur une traverse terminale du "sommier" de chaque élément de flèche, c'est-à-dire du treillis inférieur horizontal de cet élément de flèche, composé d'une part des membrures inférieures, formant chemin de roulement pour le chariot de flèche, et d'autre part de barres ou diagonales de contreventement, les pions de centrage étant situés au niveau des membrures inférieures.

Quant aux deux trous, prévus en correspondance avec les deux pions de centrage, ceux-ci sont ménagés, au niveau des membrures inférieures, sur une autre traverse terminale du "sommier" de chaque élément de flèche, à l'extrémité de cet élément opposée à celle portant les pions de centrage.

Selon une forme d'exécution, chacune des deux liaisons de l'ensemble de blocage comprend un axe de serrage, monté coulissant sur un élément de flèche, au niveau des membrures inférieures, dans la direction longitudinale de cet élément, entre une position reculée de stockage et une position avancée d'assemblage, l'axe de serrage possédant un logement prévu pour recevoir un coin de blocage de la liaison. Chaque axe de serrage comporte lui-même, d'arrière en avant, une tôle ou plaque de guidage, une tête élargie formant butée, une partie cylindrique pourvue d'un logement de réception du coin de blocage, et une pointe, la tôle ou plaque de guidage coopérant avec une glissière fixée sur l'élément de flèche, en particulier soudée à la traverse terminale du "sommier" de l'élément de flèche. La glissière comporte un organe de butée, tel qu'une goupille, prévu pour limiter le recul de l'axe de serrage en position de stockage, par coopération avec la tôle ou plaque de guidage. Cet axe de serrage traverse de façon librement coulissante une ouverture correspondante de la traverse terminale du "sommier" de l'élément de flèche. Le coin de blocage de la liaison, adapté au logement correspondant de l'axe de serrage, reçoit lui-même une goupille, pour la sécurisation de ce coin de blocage.

Dans l'ensemble, le dispositif d'assemblage objet de l'invention possède, par rapport à la technique existante, les avantages suivants :
- Ce dispositif ne nécessite aucune manutention des pièces de liaison, qui sont toutes guidées et/ou retenues sur les éléments de flèche à assembler.
- Le dispositif ne demande ni effort, ni outillage pour engager les axes de liaison ; cet engagement se fait aisément à la main.
- Le dispositif supprime toute difficulté d'alignement des différents organes à lier, et il ne présente pas de risque de grippage, ceci résultant en particulier du tenon avec trou oblong, et du centrage réalisé à l'aide de pions coniques et par le poids propre de l'élément de flèche.
- Le démontage de l'assemblage s'effectue lui aussi, pour l'essentiel, à la main et sans effort, en particulier pour ce qui concerne le retrait des axes de liaison et le recul des axes de serrage. Seuls les coins de blocage nécessitent une frappe à l'aide d'un marteau, pour leur mise en place et leur retrait. Les positions nécessaires pour supprimer les efforts sur les pièces de liaison sont réalisées à l'aide d'un engin de manutention.
- Le temps nécessaire à l'assemblage des éléments de flèche, ou à leur démontage, peut ainsi être réduit.

L'invention sera mieux comprise à l'aide de la description qui suit, en référence au dessin schématique annexé représentante à titre d'exemple, une forme d'exécution de ces éléments de flèche d'une grue à tour :
Figure 1 représente, en perspective, un élément de flèche pourvu du dispositif d'assemblage selon la présente invention, avec représentation partielle des éléments de flèche adjacents ;
Figure 2 est une vue en perspective des composants réalisant la liaison au niveau des membrures supérieures, avant assemblage ;
Figure 3 est une vue de face, avec coupe partielle, des composants réalisant la liaison au niveau des membrures supérieures, en cours d'assemblage;
Figure 4 est une vue de face des mêmes composants, après assemblage ;
Figure 5 est une vue en perspective des composants réalisant la liaison au niveau des membrures inférieures, avant assemblage ;
Figure 6 est une vue en perspective des composants réalisant la liaison au niveau des membrures inférieures, après assemblage.

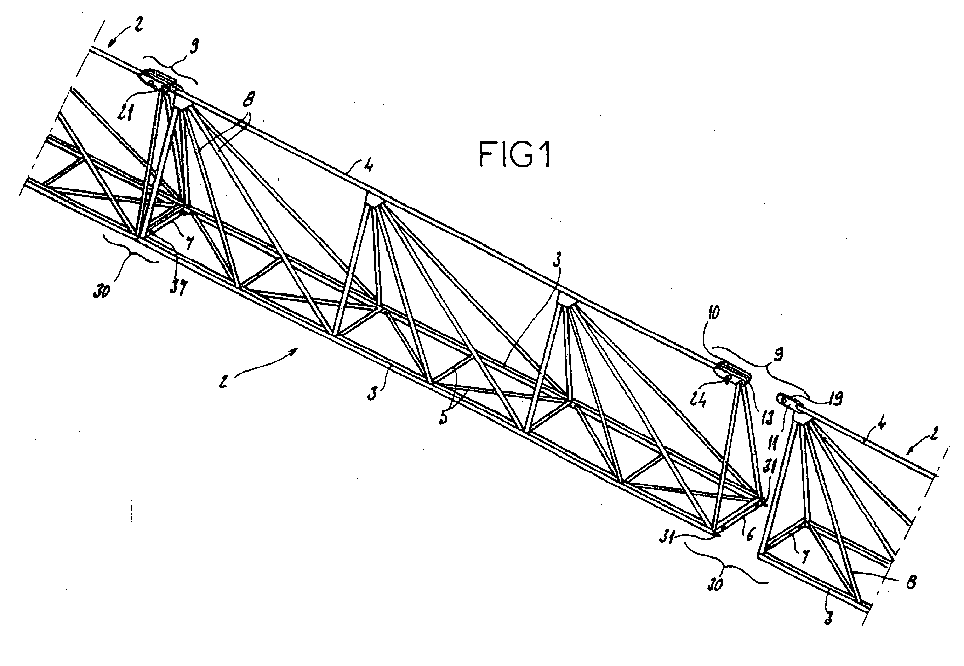

Comme le montre la figure 1, l'invention s'applique notamment à l'assemblage d'éléments de flèche 2, prévus pour être alignés et réunis bout à bout pour constituer une flèche de grue complète, de la longueur voulue. Chaque élément de flèche 2 est une structure du genre poutre en treillis, ayant (dans l'exemple illustré) une section triangulaire. Ainsi, l'élément de flèche 2 comporte ici deux membrures inférieures 3, et une unique membrure supérieure 4, qui définissent une face inférieure horizontale et deux faces latérales inclinées.

Dans la face inférieure horizontale de l'élément de flèche 2, les deux membrures inférieures 3 sont reliées entre elles par des barres 5, transversales ou obliques. Les extrémités correspondantes des deux membrures inférieures 3 sont reliées aussi par des traverses terminales, respectivement 6 et 7. Les deux membrures inférieures 3 constituent aussi le chemin de roulement pour le chariot de flèche.

Dans chacune des deux faces latérales inclinées de l'élément de flèche 2, la membrure inférieure 3 est reliée à la membrure supérieure 4 par d'autres barres droites ou obliques 8, qui forment une "triangulation" adaptée.

On s'intéresse ici, plus particulièrement, à des dispositions prévues aux extrémités des éléments de flèche 2, et illustrées en détail par les figures suivantes, qui sont prévues pour assembler entre eux ces éléments de flèche 2.

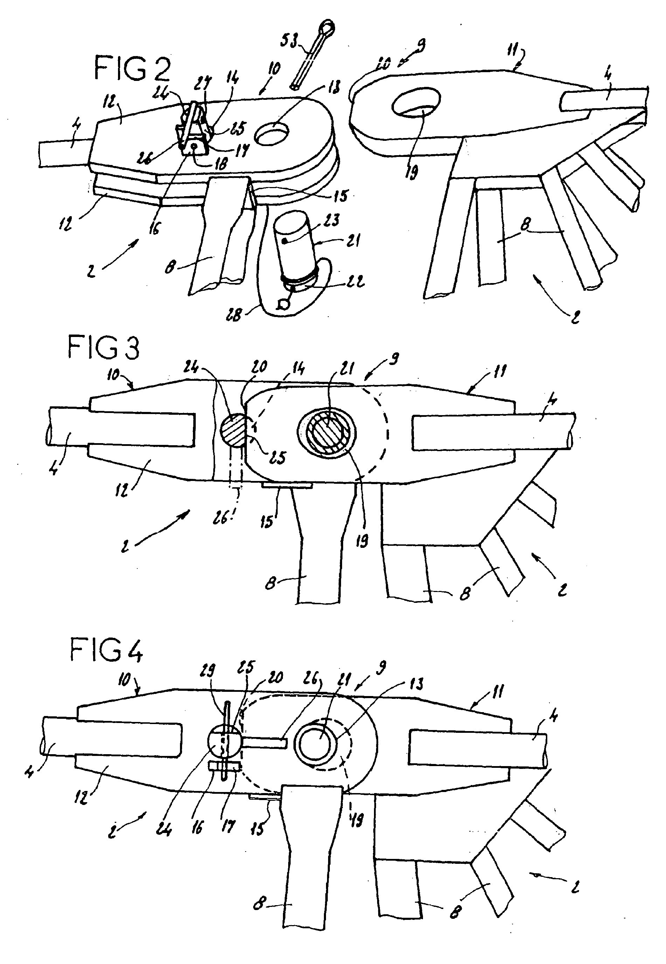

En particulier, les figures 2 à 4 montrent les composants qui réalisent la liaison, globalement désignée par le repère 9, au niveau des membrures supérieures 4 des éléments de flèche 2 à assembler. La liaison 9 est du type à chape et tenon, et à axe de liaison, avec une chape 10 solidaire de l'extrémité avant de la membrure supérieure 4 d'un premier élément de flèche 2, et avec un tenon 11, complémentaire de la chape 10, solidaire de l'extrémité arrière de la membrure supérieure 4 d'un deuxième élément de flèche 2.

Plus particulièrement, la chape 10 possède deux branches 12, en forme de plaques, situées dans des plans verticaux parallèles entre eux et à la direction longitudinale de l'élément de flèche 2. Les deux branches 12 de la chape 10 sont percées de trous principaux 13 cylindriques, coaxiaux, dont le diamètre correspond à celui d'un axe de liaison (décrit ci-après). Ces deux branches 12 sont aussi percées de trous secondaires 14 cylindriques, coaxiaux, situés en arrière des deux trous principaux 13, et prévus pour recevoir un positionneur rotatif (décrit ci-après).

Les deux branches 12 de la chape 10 sont réunies, dans leur partie inférieure, par une plaque de butée 15 sensiblement horizontale, en particulier soudée sous les bords inférieurs des deux branches 12.

Sur la face extérieure de l'une des branches 12 de la chape 10 est soudée une patte latérale 16, sensiblement horizontale, qui sert de butée d'arrêt pour le positionneur rotatif. A cet effet, la patte 16 présente une échancrure 17. Cette patte 16 est aussi percée d'un trou 18, prévu pour recevoir une goupille.

Le tenon 11 est situé dans un plan vertical, et il est percé d'un trou oblong 19, dont la direction longitudinale est sensiblement horizontale. A son extrémité libre, ce tenon 11 présente une face terminale usinée 20, plane et sensiblement verticale.

L'axe de liaison 21 possède une forme générale cylindrique, toutefois avec une tête élargie 22 à l'une de ses extrémités. Vers son autre extrémité, l'axe de liaison 21 comporte un trou diamétral 23, prévu pour recevoir une goupille d'immobilisation.

Le positionneur rotatif 24 se présente comme un axe horizontal, qui est logé dans la chape 10 et qui, plus particulièrement, traverse les deux trous secondaires 14 des branches 12 de la chape 10. De forme générale cylindrique, ce positionneur rotatif 24 présente latéralement un méplat 25. Une poignée de commande 26, réalisée sous la forme d'une simple tige radiale, est fixée à une extrémité extérieure du positionneur rotatif 24, du côté où se trouve la patte latérale 16. Vers ses deux extrémités, le positionneur rotatif 24 comporte encore des trous diamétraux 27, prévus pour recevoir respectivement deux goupilles d'immobilisation de ce positionneur rotatif 24.

L'axe de liaison 21 est relié de façon "imperdable" à la chape 10, au moyen d'un court câble de retenue 28 qui raccorde la tête élargie 22 de cet axe de liaison 21 au positionneur rotatif 24.

Grâce aux dispositions précédemment décrites, le positionneur rotatif 24 est déplaçable angulairement, à l'aide de sa poignée de commande 26, entre deux positions séparées l'une de l'autre par une rotation de 90° :
- Dans la première position, dite position de montage, et montrée sur les figures 2 et 3, le méplat 25 du positionneur rotatif 24 est en position verticale, face à l'emplacement de l'axe de liaison 21 ; la poignée de commande 26 occupe alors une position verticale, dirigée vers le bas, dans laquelle elle coopère avec l'échancrure 17 de la patte latérale 16, qui constitue alors une butée de positionnement vertical et axial.
- Dans la seconde position, dite position de travail, montrée sur la figure 4, le méplat 25 du positionneur rotatif 24 est en position horizontale, et dirigé vers le haut ; le positionneur 24 se trouve alors immobilisé en position par une goupille 29, introduite verticalement au travers d'un trou diamétral 27 de ce positionneur 24 et du trou 18 de la patte latérale 16.

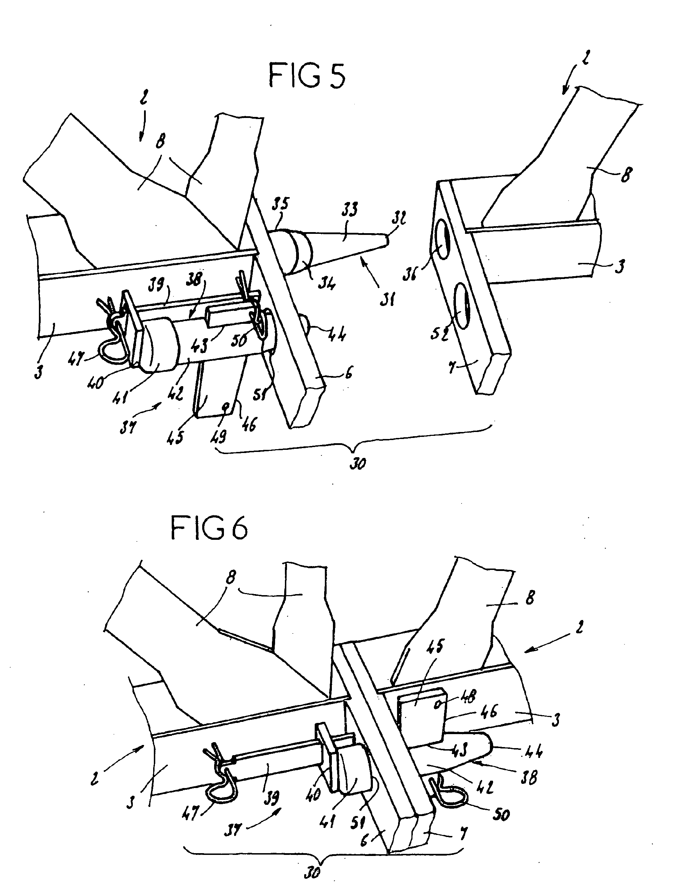

Les figures 5 et 6 montrent les composants qui réalisent la liaison, globalement désignée par la référence 30, au niveau des membrures inférieures 3 des éléments de flèche 2 à assembler. Ces composants sont, plus particulièrement, associés aux traverses terminales 6 et 7 des "sommiers" respectifs des éléments de flèche 2.

A l'extrémité avant d'un élément de flèche 2, sont fixés deux pions de centrage 31, dont les axes sont orientés suivant la direction longitudinale de l'élément de flèche 2. Ces deux pions de centrage 31 sont fixés respectivement vers les deux extrémités de la traverse terminale avant 6 de l'élément de flèche 2, donc au niveau des membrures inférieures et du chemin de roulement, comme le montre aussi la figure 1. En se référant plus particulièrement à la figure 5, chaque pion de centrage 31 possède une allure générale conique et comporte, à partir de son extrémité libre et en direction de la traverse 6 :
- une pointe arrondie 32 ;
- une première partie tronconique 33, de plus faible diamètre et relativement longue ;
- une seconde partie tronconique 34, de diamètre plus important et relativement courte, avec un angle d'ouverture de cône plus grand que celui de la première partie tronconique 33 ;
- une partie cylindrique de matage 35.

En correspondance avec les positions des deux pions de centrage 31, la traverse terminale arrière 7 d'un élément de flèche 2 comporte, vers ses extrémités, deux trous cylindriques 36, dont le diamètre correspond à celui de la partie cylindrique de matage 35 de chaque pion de centrage 31.

Les composants qui réalisent la liaison 30 au niveau des membrures inférieures 3 comprennent aussi un ensemble de blocage, constitué par deux liaisons 37 symétriques, espacées l'une de l'autre, chaque liaison 37 étant située à proximité d'un pion de centrage 31, sur le côté "intérieur" par rapport à ce pion de centrage 31.

Chaque liaison 37 comprend un axe de serrage 38, monté coulissant à l'avant de l'élément de flèche 2, dans la direction longitudinale de cet élément, parallèlement à une glissière 39 soudée sur la traverse avant 6 de l'élément de flèche 2, et s'étendant vers l'arrière parallèlement à une membrure inférieure 3.

L'axe de serrage 38 comporte, d'arrière en avant :
- une tôle de guidage 40, qui coopère avec la glissière 39, laquelle traverse une fente ou encoche de la tôle de guidage 40 ;
- une tête d'axe élargie 41, sur la face arrière de laquelle est soudée la tôle de guidage 40 ;
- une partie d'axe cylindrique 42, pourvue d'un logement en forme de fente verticale 43 ;
- une extrémité d'axe avant en forme de pointe 44.

Le logement en forme de fente verticale 43 de l'axe de serrage 38 est prévu pour recevoir un coin de blocage 45 de la liaison 37. Le coin de blocage 45 comporte un bord avec pente 46, tandis que le logement en forme de fente 43 possède une face terminale inclinée selon un angle correspondant à la pente du coin 45, cet angle étant par exemple égal à environ 6°.

La liaison 37 comprend encore, à l'extrémité arrière de la glissière 39, une goupille 47 constituant un organe de butée pour l'axe de serrage 38. Le coin de blocage 45 est percé d'un trou supérieur 48 et d'un trou inférieur 49, une autre goupille 50 pouvant être engagée dans l'un ou l'autre de ces deux trous 48 et 49.

Enfin, chaque liaison 37 comprend, sur la traverse avant 6 de l'élément de flèche 2, un trou cylindrique 51 dans lequel est monté librement coulissant l'axe de serrage 38, et sur la traverse arrière 7 de l'élément de flèche 2, un trou cylindrique 52 correspondant, prévu pour être traversé par l'axe de serrage 38 (en position avancée d'assemblage selon la figure 6).

L'utilisation du dispositif d'assemblage, précédemment décrit, est la suivante :

L'assemblage des éléments de flèche 2 est réalisé au sol. En se référant à la figure 1, on considère qu'un élément de flèche 2 repose au sol sur des supports horizontaux (non représentés), l'extrémité avant de cet élément de flèche 2 présentant, en saillie, une chape 10 au niveau de sa membrure supérieure 4, et deux pions de centrage 31 au niveau de ses membrures inférieures 3.

L'élément de flèche 2 suivant (représenté partiellement à droite sur la figure 1) est amené en regard de l'élément de flèche 2 précédent, en position légèrement inclinée sur l'horizontale, à l'aide d'un engin de manutention et d'élingues, cette approche pouvant aussi être considérée comme étant illustrée par la figure 2, en ce qui concerne les parties supérieures des deux éléments de flèche 2. Préalablement, le positionneur rotatif 24 porté par la chape 10 a été placé en position de montage, c'est-à-dire avec son méplat 25 en position verticale.

Toujours à l'aide de l'engin de manutention, le tenon 11 du deuxième élément de flèche 2 est engagé entre les deux branches 12 de la chape 10, et il est amené en butée verticale et horizontale : la butée verticale résulte de l'appui du bord inférieur du tenon 11 sur la plaque de butée 15 solidaire de la chape 10, tandis que la butée horizontale résulte de l'appui de la face terminale 20 du tenon 11 contre le méplat 25 du positionneur rotatif 24 - voir figure 3.

Le trou oblong 19 de la chape 11 se place alors en correspondance avec les deux trous principaux 13 de la chape 10, et l'axe de liaison 21 est engagé au travers de ces trois trous. La goupille 53 (voir aussi figure 2) est mise en place dans le trou 23 de l'axe de liaison 21, pour assurer son immobilisation axiale.

Ensuite, le deuxième élément de flèche 2 est aligné avec le premier élément de flèche 2, par une rotation du deuxième élément de flèche 2 autour de l'axe de liaison 21 précédemment mis en place. Vers la fin de ce mouvement de rotation qui s'effectue autour de l'axe de liaison 21 situé au niveau de la membrure supérieure 4, les pions de centrage 31 situés au niveau des membrures inférieures 3 du premier élément de flèche 2 s'engagent dans les trous 36 correspondants de la traverse arrière 7 du deuxième élément de flèche 2. Plus particulièrement, l'intervention des pions de centrage 31 se décompose comme suit :
- La première partie tronconique 33 de chaque pion de centrage 31 réalise un prépositionnement initial.
- La seconde partie tronconique 34 effectue un centrage, en reprenant les écarts de tolérance de positionnement des pions 31 relativement aux trous 36 correspondants.
- La partie cylindrique de matage 35 assure un positionnement relatif précis des deux éléments de flèche 2, et aussi la reprise des efforts tranchants dus à la charge roulante, cette partie cylindrique 35 se plaçant finalement dans le trou 36 correspondant.

La figure 5 montre le pion de centrage 31 avant engagement dans le trou 36 correspondant, tandis que la figure 6 illustre la position obtenue après engagement complet, la traverse arrière 7 du deuxième élément de flèche 2 étant parvenue finalement en appui contre la traverse avant 6 du premier élément de flèche 2.

Chaque liaison 37 située au niveau des membrures inférieures 3 est alors serrée, en avançant l'axe de serrage 38 par coulissement le long de la glissière 39 et au travers du trou 51 de la traverse avant 6 de l'élément de flèche 2, l'axe de serrage 38 s'engageant aussi au travers du trou 52 correspondant de la traverse arrière 7 du deuxième élément de flèche 2. Le coin de blocage 45 est mis en place, pour verrouiller cette liaison 37.

Ensuite, la liaison 9 réalisée au niveau des membrures supérieures 4 est verrouillée, par une rotation du positionneur 24 sur 90°, commandée par manoeuvre de la poignée 26, et amenant le positionneur rotatif 24 en position de travail, son méplat 25 étant horizontal (voir la figure 4). Le positionneur rotatif 24 est immobilisé en rotation dans cette position de travail par mise en place de la goupille 29.

Le deuxième élément de flèche 2, désormais assemblé rigidement au premier élément de flèche 2, dans l'alignement du premier élément, est enfin calé par l'introduction de supports sous ce deuxième élément de flèche 2.

L'assemblage des éléments de flèche 2 suivants se fait selon le même processus, jusqu'à l'obtention d'une flèche de grue de la longueur voulue.

Pour le démontage et la séparation des éléments 2 d'une flèche, également effectués au sol, il est procédé comme suit :
- Le deuxième élément de flèche 2 (celui situé le plus en avant) est pris en charge par l'engin de manutention, au moyen d'élingues.
- Au niveau de la liaison supérieure 9, le positionneur rotatif 24 est orienté manuellement, au moyen de sa poignée de commande 26, de manière à ramener son méplat 25 en position verticale, en face de l'axe de liaison 21.
- Les coins de blocage 45 des deux liaisons 37, situées au niveau des membrures inférieures 3, sont dégagés de leurs logements 43 respectifs.
- Les axes de serrage 38, ainsi libérés, sont reculés par coulissement le long de leurs glissières 39 respectives, jusqu'à la butée de leurs tôles de guidage 40 contre la goupille 47.
- Le deuxième élément de flèche 2 est pivoté vers le haut, autour de l'axe de liaison 21, à l'aide de l'engin de manutention, de manière à dégager entièrement les pions de centrage 31.
- L'axe de liaison 21 est alors retiré, de manière à supprimer la liaison entre la chape 10 et le tenon 11.

Les deux éléments de flèche 2 considérés se trouvent alors séparés et, bien entendu, la même opération sera répétée pour tous les éléments de la flèche.

Le dispositif d'assemblage, précédemment décrit, est notamment applicable à la liaison démontable des éléments d'une flèche de grue à tour sans tête de mât et sans tirant de flèche. Il s'applique aussi aux contre-flèches de telles grues, dans la mesure où ces contre-flèches possèdent une structure en treillis. Toutefois; l'invention reste applicable aussi aux flèches et contre-flèches des grues à tour avec tête de mât et tirants, en particulier pour la partie en porte-à-faux des flèches de grues avec tête de mât et tirants, partie dans laquelle la ou les membrures supérieures sont soumises à des efforts de traction.

L'on ne s'éloignerait pas du cadre de l'invention, telle que définie dans les revendications annexées:
- pour l'assemblage par chape et tenon prévu au niveau des membrures supérieures : en modifiant le détail des moyens de butée et de positionnement ;
- pour l'assemblage réalisé au niveau des membrures inférieures : en modifiant le détail de l'ensemble de blocage ;
- en appliquant le même dispositif d'assemblage à des éléments de flèche ou de contre-flèche en treillis de section autre que triangulaire, par exemple de section rectangulaire, carrée ou trapézoïdale, l'assemblage par chape et tenon étant bien entendu doublé dans le cas d'une telle section définie par deux membrures supérieures ;
- en destinant ce dispositif d'assemblage à des grues de tous types, avec flèche et/ou contre-flèche en treillis ;
- en utilisant le même dispositif pour l'assemblage des éléments constitutifs d'autres structures en treillis, analogues à des flèches de grues, par exemple en appliquant l'invention à un avant-bec de portique de manutention, ou à une potence.

## Revendications

1. Eléments de flèche (2) à structure en treillis d'une grue à tour, ou autre structure en treillis analogue, lesdits éléments comprenant des membrures supérieures (4) et des membrures inférieures (3), reliées entre elles par des barres de triangulation (5, 8), éléments pour lesquels au niveau des membrures supérieures (4) il est prévu un assemblage (9) par chape et tenon liés de façon démontable par un axe, avec :
- une chape (10) solidaire d'une extrémité de membrure supérieure (4) d'un élément (2) à assembler, la chape (10) possédant deux branches (12) situées dans des plans verticaux parallèles et percées de trous principaux (13) cylindriques, coaxiaux, de diamètre correspondant au diamètre d'un axe de liaison,
- un tenon (11) solidaire d'une autre extrémité de membrure supérieure (4) d'un élément (2) à assembler, le tenon (11) étant situé dans un plan vertical et étant percé d'un trou oblong (19),
- l'axe de liaison (21), apte à être engagé au travers des trous principaux (13) cylindriques de la chape (10) et du trou oblong (19) du tenon (11), et
- sur la chape (10) et le tenon (11), des moyens de butée complémentaires (15 à 29), agissant en direction sensiblement verticale et en direction sensiblement horizontale, pour le positionnement relatif de la chape (10) et du tenon (11) lors de l'assemblage,
**caractérisés en ce que** les moyens de butée, agissant en direction sensiblement horizontale, sont constitués, par une part, par un positionneur rotatif (24) logé dans la chape (10), et réalisé en forme d'axe traversant deux trous secondaires (14) cylindriques, coaxiaux, ménagés respectivement dans les deux branches (12) de la chape (10), le positionneur (24) rotatif en forme d'axe étant pourvu d'un méplat (25) et de moyens (26, 27, 29) de manoeuvre et d'immobilisation, qui permettent d'amener et de maintenir le méplat (25) en position verticale, face à l'emplacement de l'axe de liaison (21) , ou en position horizontale, et ces moyens de butée étant constitués, d'autre part, par une face avant plane (20) , sensiblement verticale, du tenon (11), les éléments de flèche (2) comprenant aussi, au niveau de leurs membrures inférieures (3) :
- deux pions de centrage (31) solidaires d'une extrémité d'un élément (2) à assembler, les axes des pions de centrage (31) étant orientés suivant la direction longitudinale dudit élément (2),
- deux trous (36) correspondant respectivement aux deux pions de centrage (31), et formés à une autre extrémité d'un élément (2) à assembler, et
- un ensemble de blocage constitué de deux liaisons (37) espacées l'une de l'autre, avec des moyens de serrage et de blocage (38 à 52), prévues pour réunir les extrémités rapprochées des deux éléments de flèche (2), au niveau de leurs membrures inférieures (3).

2. Eléments de flèche selon la revendication 1, **caractérisés en ce que** les moyens de butée, agissant en direction sensiblement verticale, sont constitués par une plaque de butée (15), réunissant les deux branches (12) de la chape (10) dans leur partie inférieure, et coopérant avec la face inférieure du tenon (11).

3. Eléments de flèche selon la revendication 1 ou 2, **caractérisés en ce que** les moyens de manoeuvre et d'immobilisation du positionneur rotatif (24) comprennent une poignée de commande (26) liée à une extrémité de ce positionneur rotatif (24), et par au moins une goupille d'immobilisation (29) engageable dans un trou diamétral (27) d'une région d'extrémité du positionneur rotatif (24), ainsi que dans une patte latérale (16) solidaire d'une branche (12) de la chape (10).

4. Eléments de flèche selon la revendication 3, **caractérisés en ce que** la ou chaque goupille (29) sert à l'immobilisation du positionneur rotatif (24) dans sa position angulaire pour laquelle son méplat (25) est en position horizontale.

5. Eléments de flèche selon la revendication 3 ou 4, **caractérisés en ce que** la patte latérale (16) possède une échancrure (17) prévue pour coopérer avec la poignée de manoeuvre (26) du positionneur rotatif (24), en formant une butée d'arrêt de ce positionneur (24) dans sa position angulaire pour laquelle son méplat (25) est en position verticale.

6. Eléments de flèche selon l'une quelconque des revendications 1 à 5, **caractérisés en ce que** l'axe de liaison (21), de forme générale cylindrique, engagé au travers de la chape (10) et du tenon (11) possède à une extrémité une tête élargie (22), tandis que son autre extrémité comporte un trou diamétral (23) prévu pour recevoir une goupille d'immobilisation (53), l'axe de liaison (21) ainsi constitué ayant sa tête (22) raccordée, par un court câble de liaison (28), à la chape (10) ou à un organe (24) retenu sur cette chape (11).

7. Eléments de flèche selon la revendications 6, **caractérisés en ce que** le câble de liaison (28) raccorde la tête (22) de l'axe de liaison (21) au positionneur rotatif (24), notamment à une goupille (29) de ce positionneur (24) .

8. Eléments de flèche selon l'une quelconque des revendications 1 à 7, **caractérisés en ce que** chaque pion de centrage (31) comporte, à partir d'une pointe extérieure (32), successivement : une première partie en forme de tronc de cône (33), de plus faible diamètre et relativement allongée ; une autre partie en forme de tronc de cône (34), située dans le prolongement de la précédente, de plus grand diamètre et relativement courte, avec un angle d'ouverture de cône plus grand que celui de la première partie en forme de tronc de cône (33) ; une partie cylindrique de matage (35), rattachée à la structure de l'élément de flèche (2), au niveau des membrures inférieures (3).

9. Eléments de flèche selon l'une quelconque des revendications 1 à 8, **caractérisés en ce que** les pions de centrage (31) sont montés sur une traverse terminale (6) du "sommier" de chaque élément de flèche (2), c'est-à-dire du treillis inférieur horizontal de cet élément de flèche (2), composé d'une part des membrures inférieures (3), formant chemin de roulement pour le chariot de flèche, et d'autre part des barres ou diagonales de contreventement (5), les pions de centrage (31) étant situés au niveau des membrures inférieures (3).

10. Eléments de flèche selon la revendication 9, **caractérisés en ce que** les deux trous (36), prévus en correspondance avec les deux pions de centrage (31), sont ménagés au niveau des membrures inférieures (3), sur une autre traverse terminale (7) du "sommier" de chaque élément de flèche (2), à l'extrémité de cet élément (2) opposée à celle portant les pions de centrage (31).

11. Eléments de flèche selon l'une quelconque des revendications 1 à 10, **caractérisés en ce que** chacune des deux liaisons (37) de l'ensemble de blocage comprend un axe de serrage (38), monté coulissant sur un élément de flèche (2), au niveau des membrures inférieures (3), dans la direction longitudinale de cet élément (2), entre une position reculée de stockage et une position avancée d'assemblage, l'axe de serrage (38) possédant un logement (43) prévu pour recevoir un coin de blocage (45) de la liaison (37).

12. Eléments de flèche selon la revendication 11, **caractérisés en ce que** chaque axe de serrage (38) comporte lui-même, d'arrière en avant, une tôle ou plaque de guidage (40), une tête élargie (41) formant butée, une partie cylindrique (42) pourvue d'un logement de réception (43) du coin de blocage (45), et une pointe (44), la tôle ou plaque de guidage (40) coopérant avec une glissière (29) fixée sur l'élément de flèche (2), en particulier soudée à la traverse terminale (6) du "sommier" de l'élément de flèche (2).

13. Eléments de flèche selon la revendication 12, **caractérisés en ce que** la glissière (39) comporte un organe de butée, tel qu'une goupille (47), prévu pour limiter le recul de l'axe de serrage (38) en position de stockage, par coopération avec la tôle ou plaque de guidage (40)

14. Eléments de flèche selon la revendication 12 ou 13, **caractérisés en ce que** l'axe de serrage (38) traverse de façon librement coulissante une ouverture correspondante (51) de la traverse terminale (6) du "sommier" de l'élément de flèche (2).

15. Eléments de flèche selon l'une quelconque des revendications 11 à 14, **caractérisés en ce que** le logement (43), ménagé dans l'axe de serrage (38) pour recevoir le coin de blocage (45), possède une face terminale (46) inclinée selon un angle correspondant à la pente du coin de blocage (45).

16. Eléments de flèche selon l'une quelconque des revendications 11 à 15, **caractérisé en ce que** le coin de blocage (45) reçoit une goupille (50), pour la sécurisation de ce coin de blocage (45).

17. Eléments de flèche selon l'une quelconque des revendications 1 à 16, **caractérisés par** leur application à la liaison démontable des éléments (2) d'une flèche ou d'une contre-flèche de grue à tour sans tête de mât et sans tirant de flèche.

## Claims

1. Latticework jib elements (2) of a tower crane or another similar latticework structure, the said elements comprising upper chords (4) and lower chords (3) connected to one another by means of triangulation bars (5,8), wherein in the region the upper chords (4), there is provided an assembly (9) by shackle and tenon connected demountably by means of a shaft, with:
- a scackle (10) integral with an upper chord (4) end of an element (2) to be assembled, the shackle (10) possessig two branches (12) located in parallel vertical planes and pierce with main coaxial cylindrical holes (12) of a diameter corresponding to the diameter of a connecting shaft,
- a tenon (11) integral with another upper chord (4) end of an element (2) to be assembled, the tenon (11) being located in a vertical plane and being pierced with an oblong hole (19),
- the connecting shaft (21) capable of being engaged through main cylindrical holes (13) of the shackle (10) and through the oblong hole (19) of the tenon (11), and,
- on the shackle (10) and the tenon (11), complementary abutment means (15 to 29) acting in a susbtantially vertical direction and in a substantially vertical direction and in a susbtantially horizontal direction for the relative positioning of the shackle (10) and the tenon (11) during assembly,
**characterized in that** the abutment means acting in a substantially horizontal direction consist, on the one hand, of a rotary positioner (24) seated in the shackle (10) and produced in the form of a shaft passing through two secondary coaxial cylindrical holes (14) formed respectively in the two branches (12) of the shackle (10), the shaft-shaped rotary positioner (24) being provided with a flat (25) and with manipulating and immobilizing means (26, 27, 29) which make it possible to bring the flat (25) into and maintain it in a vertical position, facing the location of the connecting shaft (21), or in a horizontal position, and these abutment means consisting, on the other hand, of a substantially vertical plane front face (20) of the tenon (11), the jib elements (2) further comprising in the region of their lower chords (3):
- two centering pegs (31) integral with one end of an element (2) to be assembled, the axes of the centering pegs (31) being oriented in the longitudinal direction of the said element(2),
- two holes (36) corresponding respectively to the two centering pegs (31) and formed at another end of an element (2) to be assembled, and
- a locking assembly consisting of two connections (37) spaced apart from one another, with clamping and locking means (38 to 52), the said connections being provided for joining the mutually adjacent ends of the two jib elements (2), in the region of their lower chords (3).

2. Jib elements according to claim 1, **characterized in that** the abutment means acting in a substantially vertical direction consist of an abutment plate (15) joining the two branches (12) of the shackle (10) in their lower part and cooperating with the lower face of the tenon (11).

3. Jib elements according to claim 1 or 2, **characterized in that** the means for manipulating and immobilizing the rotary positioner (24) comprise a control handle (26) connected to one end of this rotary positioner (24), and at least one immobilizing pin (29) engageable into a diametral hole (27) of an end region of the rotary positioner (24) and into a lateral tab (16) integral with a branch (12) of the shackle (10).

4. Jib elements according to claim 3, **characterized in that** the or each pin (29) serves for immobilizing the rotary positioner (24) in its angular position in which its flat (25) is in the horizontal position.

5. Jib elements according to claim 3 or 4, **characterized in that** the lateral tab (16) possesses an indentation (17) provided for cooperating with the control handle (26) of the rotary positioner (24) , at the same time forming an abutment stopping this positioner (24) in its angular position in which its flat (25) is in the vertical position.

6. Jib elements according to any one of claims 1 to 5, **characterized in that** the connecting shaft (21), of cylindrical general shape, engaged through the shackle (10) and the tenon (11) possesses a widened head (22) at one end, while its other end comprises a diametral hole (23) provided for receiving an immobilizing pin (53), the connecting shaft (21) formed in this way having its head (22) connected by means of a short connecting cable (28) to the shackle (10) or to a member (24) retained on this shackle (11).

7. Jib elements according to claim 6, **characterized in that** the connecting cable (28) connects the head (22) of the connecting shaft (21) to the rotary positioner (24), in particular to a pin of this positioner (24).

8. Jib elements according to any one of claims 1 to 7, **characterized in that** each centering peg (31) comprises, starting from an outer tip (32), in succession: a frustoconical first part (33) of smaller diameter and relatively elongate; another frustoconical part (34) located in the elongation of the preceding part, of larger diameter and relatively short, with a cone aperture angle larger than that of the frustoconical first part (33); a cylindrical calking part attached (35) to the structure of the jib element (2), in the region of the lower chords (3).

9. Jib elements according to to any one of claims 1 to 8, **characterized in that** the centering pegs (31) are mounted on an end crossmember (16) of the "stringer" of each element (2), that is to say of the horizontal lower latticework of this jib element (2), composed, on the one hand, of the lower chords (3) forming a rolling track for the jib trolley and, on the other hand, of the crossbracing bars or diagonals (5) , the centering pegs (31) being located in the region of the lower chords (3).

10. Jib elements according to claim 9, **characterized in that** the two holes (36) provided so as to correspond to the two centering pegs (31) are formed in the region of the lower chords (3), on another end crossmember (7) of the "stringer" of each jib element (2), at that end of this element (2) which is opposite that carrying the centering pegs (31).

11. Jib elements according to any one of claims 1 to 10, **characterized in that** each of the two connections (37) of the locking assembly comprises a clamping shaft (38) mounted slideably on a jib element (2), in the region of the lower chords (3), in the longitudinal direction of this element (2), between a retracted storage position and an advanced assembly position, the clamping shaft (38) possessing a receptacle (43) provided for receiving a locking wedge (45) of the connection (37).

12. Jib elements according to claim 11, **characterized in that** each clamping shaft (38) itself comprises, from the rear forward, a guide sheet or plate (40), a widened head (41) forming an abutment, a cylindrical part (42) provided with a receptacle (43) for receiving the locking wedge (45) , and a tip (44), the guide sheet or plate (40) cooperating with a slideway (29) fastened to the jib element (2), in particular welded to the end crossmember (6) of the "stringer" of the jib element (2).

13. Jib elements according to claim 12, **characterized in that** the slideway (39) comprises an abutment member, such as a pin (47), provided for limiting the retraction of the clamping shaft (38) into the storage position, as a result.

14. Jib elements according to claim 12 or 13, **characterized in that** the clamping shaft (38) passes in a freely slideable manner through a corresponding orifice (51) of the end crossmember (6) of the "stringer" of the jib element (2).

15. Jib elements according to any one of claims 11 to 14, **characterized in that** the receptacle (43) formed in the clamping (38) shaft for receiving the locking wedge (45) possesses an end face (46) inclined at an angle corresponding to the slope of the locking wedge (45).

16. Jib elements according to any one of claims 11 to 15, **characterized in that** the locking wedge (45) receives a pin (50) for securing this locking wedge (45).

17. Jib elements according to any one of claims 1 to 16 **characterized by** their use for demountable connection of the elements (2) of a jib or counterj ib of a tower crane without a masthead and without a jib tie.

## Patentansprüche

1. Auslegerelemente (2) in Gitterstruktur für einen Turmdrehkran, oder eine andere analoge Gitterstruktur, wobei diese Elemente obere Gurte (4) und untere Gurte (3) umfassen, die untereinander durch Dreiecke bildende Stangen (5, 8) verbunden sind, Elemente, für die im Bereich der oberen Gurte (4) eine Verbindung (9) durch Gabelstück und Zapfen vorgesehen ist, die durch einen Bolzen lösbar verbunden sind, mit:
- einem Gabelstück (10), das Bestandteil eines oberen Gurtendes (4) eines zu verbindenden Elements (2) ist, wobei das Gabelstück (10) zwei Arme (12) hat, die in parallelen vertikalen Ebenen liegen und koaxiale zylindrische Hauptlöcher (13) aufweisen, deren Durchmesser dem Durchmesser eines Verbindungsbolzens entspricht,
- einem Zapfen (11), der Bestandteil eines anderen oberen Gurtendes (4) eines zu verbindenden Elements (2) ist, wobei der Zapfen (11) in einer vertikalen Ebene liegt und ein Langloch (19) aufweist,
- einem Verbindungsbolzen (21), der durch die zylindrischen Hauptlöcher (13) des Gabelstücks (10) und durch das Langloch (19) des Zapfens (11) hindurch gesteckt werden kann, und
- am Gabelstück (10) und am Zapfen (11) einander ergänzende Anschlagvorrichtungen (15 bis 29), die in im wesentlichen vertikaler Richtung und in im wesentlichen vertikaler Richtung wirken und beim Zusammenbau der Positionierung des Gabelstücks (10) und des Zapfens (11) zueinander dienen,
**dadurch gekennzeichnet, dass** die Anschlagvorrichtungen, die in im wesentlicher vertikaler Richtung wirken, einerseits aus einem drehbaren Positionierer (24) bestehen, der in dem Gabelstück (10) sitzt und in Form eines Bolzens ausgeführt ist, der durch zwei koaxiale zylindrische Sekundärlöcher (14) hindurchgeht, die jeweils in den zwei Armen (12) des Gabelstücks vorgesehen sind, wobei der drehbare Positionierer (24) in Form eines Bolzens mit einer Abflachung (25) und Vorrichtungen (26, 27, 29) zum Betätigen und zum Fixieren ausgestattet ist, mit denen die Abflachung (25) in eine senkrechte Stellung gegenüber dem Standort des Verbindungsbolzens (21) oder in eine vertikale Stellung geführt und festgehalten werden kann, und wobei diese Anschlagvorrichtungen andererseits durch eine im wesentlichen vertikale plane Stirnfläche (20) des Zapfens (11) gebildet sind, und wobei die Auslegerelemente (2) außerdem im Bereich ihrer unteren Gurte (3) folgendes umfassen:
- zwei Zentrierstifte (31), die Bestandteil eines Endes eines zu verbindenden Elements (2) sind, wobei die Achsen der Zentrierstifte (31) in die Längsrichtung dieses Elements (2) ausgerichtet sind,
- zwei Löcher (36), die jeweils mit den zwei Zentrierstiften (31) korrespondieren und an einem anderen Ende eines zu verbindenden Elements (2) gebildet sind, und
- eine Blockiereinrichtung, die aus zwei voneinander entfernten Verbindungsvorrichtungen (37) besteht, mit Mitteln zum Festklemmen und zum Blockieren (38 bis 52), die vorgesehen sind, um die einander angenäherten Enden der zwei Auslegerelemente (2) im Bereich ihrer unteren Gurte (3) zu verbinden.

2. Auslegerelemente nach Anspruch 1, **dadurch gekennzeichnet, dass** die Anschlagvorrichtungen, die in im wesentlichen vertikaler Richtung wirken, gebildet sind durch eine Anschlagplatte (15), die die zwei Arme (12) des Gabelstücks (10) in ihrem unteren Bereich verbindet und die mit der Unterseite des Zapfens (11) zusammenwirkt.

3. Auslegerelemente nach Anspruch 1 oder 2, **dadurch gekennzeichnet, dass** die Vorrichtungen zum Betätigen und zum Fixieren des drehbaren Positionierers (24) einen Bedienhandgriff (26) umfassen, der mit einem Ende dieses drehbaren Positionierers (24) verbunden ist, und mindestens einen Fixierstift (29) umfassen, der in ein diametrales Loch (27) in einem Endbereich des drehbaren Positionierers (24) einsteckbar ist und ebenso in eine seitliche Lasche (16), die Bestandteil eines Arms (12) des Gabelstücks (10) ist.

4. Auslegerelemente nach Anspruch 3, **dadurch gekennzeichnet, dass** der oder jeder Stift (29) der Fixierung des drehbaren Positionierers (24) in seiner Winkelposition dient, bei der seine Abflachung (25) sich in vertikaler Stellung befindet.

5. Auslegerelemente nach Anspruch 3 oder 4, **dadurch gekennzeichnet, dass** die seitliche Lasche (16) einen bogenförmigen Ausschnitt (17) hat, der vorgesehen ist, um mit dem Bedienhandgriff (26) des drehbaren Positionierers (24) zusammenzuwirken, indem ein Stopp-Anschlag dieses Positionierers (24) in seiner Winkelstellung gebildet wird, in der seine Abflachung (25) sich in vertikaler Stellung befindet.

6. Auslegerelemente nach einem der Ansprüche 1 bis 5, **dadurch gekennzeichnet, dass** der Verbindungsbolzen (21), in allgemein zylindrischer Form, der durch das Gabelstück (10) und den Zapfen (11) gesteckt ist, an einem Ende einen verbreiterten Kopf (22) hat, während sein anderes Ende ein diametrales Loch (23) aufweist, das vorgesehen ist, um einen Fixiersplint (53) aufzunehmen, wobei bei dem so beschaffenen Verbindungsbolzen (21) dessen Kopf (22) durch ein kurzes Verbindungskabel (28) an das Gabelstück (10) angebunden ist, oder an ein Teil (24), das auf diesem Gabelstück (10) sitzt.

7. Auslegerelemente nach Anspruch 6, **dadurch gekennzeichnet, dass** das Verbindungskabel (28) den Kopf (22) des Verbindungsbolzens (21) mit dem drehbaren Positionierer (24) verbindet, insbesondere mit einem Stift (29) dieses Positionierers (24).

8. Auslegerelemente nach einem der Ansprüche 1 bis 7, **dadurch gekennzeichnet, dass** jeder Zentrierstift (31), ausgehend von der außen liegenden Spitze (32), auf einander folgend umfasst: einen ersten Teil in Form eines Kegelstumpfs (33) mit geringerem Durchmesser und relativ lang; einen weiteren Teil in Form eines Kegelstumpfs (34), der in der Verlängerung des vorhergehenden Stumpfs liegt, mit größerem Durchmesser und relativ kurz, mit einem Öffnungswinkel des Kegels, der größer ist als derjenige des ersten kegelstumpfförmigen Teils (33); sowie einen zylindrischen Teil (35) zum Dichtstemmen, der an der Struktur des Auslegerelements (2) im Bereich der unteren Gurte (3) angesetzt ist.

9. Auslegerelemente nach einem der Ansprüche 1 bis 6, **dadurch gekennzeichnet, dass** die Zentrierstifte (31) an eine Abschlusstraverse (6) des "Trägers" jedes Auslegerelements (2) montiert sind, das heißt, des unteren vertikalen Gitters dieses Auslegerelements (2), bestehend zum einen aus den unteren Gurten (3), die die Laufbahn für den Auslegerwagen bilden, und zum anderen aus den Streben oder Diagonalen (5) zur Windversteifung, wobei die Zentrierstifte (31) im Bereich der unteren Gurte (3) sitzen.

10. Auslegerelemente nach Anspruch 9, **dadurch gekennzeichnet, dass** die zwei Löcher (36), die korrespondierend mit den zwei Zentrierstiften (31) vorgesehen sind, im Bereich der unteren Gurte (3) auf einer anderen Abschlusstraverse (7) des "Trägers" jedes Auslegerelements (2) ausgeführt sind, und zwar an jenem Ende dieses Elements (2), das demjenigen gegenüber liegt, auf dem die Zentrierstifte (31) sitzen.

11. Auslegerelemente nach einem der Ansprüche 1 bis 10, **dadurch gekennzeichnet, dass** jede der zwei Verbindungsvorrichtungen (37) des Blockierensembles einen Klemmbolzen (38) umfasst, der auf einem Auslegerelement (2) im Bereich der unteren Gurte (3) gleitend montiert ist, und zwar in der Längsrichtung dieses Elements (2) zwischen einer zurückgezogenen Ruhestellung und einer vorgeschobenen Verbindungsstellung, wobei der Klemmbolzen (38) eine Aufnahme (43) hat, die vorgesehen ist, um einen Feststellkeil (45) für die Verbindungsvorrichtung (37) aufzunehmen.

12. Auslegerelemente nach Anspruch 11, **dadurch gekennzeichnet, dass** jeder Klemmbolzen (38) seinerseits, von hinten nach vorn, ein Führungsblech oder eine Führungsplatte (40), einen einen Anschlag bildenden verbreiterten Kopf (41), einen zylindrischen Teil (42), der mit einem Sitz (43) zur Aufnahme des Feststellkeils (45) versehen ist, sowie eine Spitze (44) hat, wobei Führungsblech oder Führungsplatte (40) mit einer Gleitschiene (39) zusammenwirken, die am Auslegerelement (2) befestigt ist, insbesondere angeschweißt an der Abschlusstraverse (6) des "Trägers" des Auslegerelements (2).

13. Auslegerelemente nach Anspruch 12, **dadurch gekennzeichnet, dass** die Gleitschiene (39) ein Anschlagteil hat, wie etwa einen Splint (47), der vorgesehen ist, um durch Zusammenwirken mit dem Führungsblech oder der Führungsplatte (40) den Rücklauf des Klemmbolzens (38) in die Ruhestellung zu begrenzen

14. Auslegerelemente nach Anspruch 12 oder 13, **dadurch gekennzeichnet, dass** der Klemmbolzen (38) frei gleitend eine entsprechende Öffnung (51) der Abschlusstraverse (6) des "Trägers" des Auslegerelements (2) durchquert.

15. Auslegerelemente nach einem der Ansprüche 11 bis 14, **dadurch gekennzeichnet, dass** der Sitz (43), der im Klemmbolzen (38) zur Aufnahme des Feststellkeils (45) vorgesehen ist, eine Abschlussfläche (46) hat, die in einem Winkel abgeschrägt ist, der der Schräge des Feststellkeils (45) entspricht.

16. Auslegerelemente nach einem der Ansprüche 11 bis 15, **dadurch gekennzeichnet, dass** der Feststellkeil (45) einen Splint zur Sicherung dieses Feststellkeils (45) aufnimmt.

17. Auslegerelemente nach einem der Ansprüche 1 bis 16, **gekennzeichnet durch** ihren Einsatz für die lösbare Verbindung von Elementen (2) eines Auslegers oder eines Gegenauslegers eines Turmdrehkrans ohne Mastkopf und ohne Ausleger-Abspannung.
